# EUROPEAN PATENT SPECIFICATION

(11) **EP 0 528 887 B1**
(45) Date of publication and mention of the grant of the patent: **04.09.1996**
(21) Application number: 91909169.4
(22) Date of filing: 17.05.1991
(51) Int. Cl.: A01N 35/02

(54) **METALDEHYDE-CONTAINING PESTICIDES**
METALLDEHYD ENTHALTENDE PESTIZIDE
PESTICIDE CONTENANT DU METALDEHYDE

(30) Priority: 18.05.1990 GB 9011187
(43) Date of publication of application: 03.03.1993
(73) Proprietor: TAVENER, Philip Brandon, Thornborough, Buckingham MK18 2DF (GB); TAVENER, Sally, Thornborough, Buckingham MK18 2DF (GB)
(72) Inventor: MISSELBROOK, John, Southampton SO2 9LX (GB); DAVIES, Margareta Wheelers Bothy Saddleheath Road, Fordingbridge SP6 3EG (GB)
(74) Representative: Gallafent, Richard John
(86) International application number: GB9100779
(87) International publication number: WO9117658

(56) References cited:
- DE-A- 3 612 161
- GB-A- 894 431
- GB-A- 2 098 869
- Central Patents Index, Basic Abstracts Journal, Section C, Week 8351, 22 February 1984, Derwent Publications Ltd., (London, GB), abstract no. 83-84878351

## Description

This invention relates to metaldehyde-containing pesticides, and to ways of formulating the same to increase their effectiveness.

Metaldehyde has been known for decades to be an effective molluscicide particularly useful for combating slugs. It has the advantage that it is relatively non-toxic to mammals and highly specific to molluscs. However, conventional "slug pellets" are often ineffective in practice serving only to disable or kill a relatively small proportion of the slug population, and to do so only after a period of several days.

Like many pesticides, its efficacy varies substantially with the conditions of application. Pesticides which rely upon ingestion for their activity need to be formulated so that they are attractive to the pests and, in particular, so that ingestion of a small amount of pesticide, particularly an amount insufficient to kill the pest, does not lead to a reaction inhibiting further ingestion, since otherwise the efficacy of the pesticide is severely decreased. This phenomenon may promote tolerance of the pesticide by a pest or even the emergence of pesticide resistant strains.

Thus it is well known that slugs tend to take a small quantity of metaldehyde and then to be disinclined to take more. Various possible mechanisms have been proposed to explain this phenomenon, including that the initial ingestion tends to paralyze the mouth parts only of the slugs, thus preventing further immediate ingestion and that, particularly in wet conditions, small quantities of acetaldehyde may be released which disinclines the slugs to eat. Similar considerations apply to snails.

It is well known to use in pesticide formulations surface active agents, particularly as spray aids to assist in wetting of vegetation by a liquid composition containing an active agent in suspension or solution. It has also been suggested, for example in British Patent Specification 2098869, that the addition of surface active agents in pesticidal compositions may promote absorption of the pesticide or agent by the pest. In that specification, molluscicide compositions are described consisting of a molluscicide and a surface active agent selected from various sorbitol and sorbitan derivatives.

We have now found that the efficiency of pesticidal compositions based on metaldehyde may be very materially improved by formulating them as a finely particulate mix, the particles of which are intimately associated with surface active agent. In a further development, we have found that such pesticidal compositions of even greater improved effectiveness may be made using surface active agent treated finely particulate pesticidal materials combined with a carrier material on to which the particles are bound by an acceptable water soluble or water dispersible polymeric material.

Metaldehyde is difficult to provide in finely particulate form, and, in a further aspect, the present invention provides a method of formulating a pesticidal composition based on metaldehyde which comprises milling the metaldehyde in solid form in the presence of a surface active agent until a desired particle size or particle size range is reached, and subsequently applying the milled material so formed to a solid carrier material. Before, during or after milling a polymeric latex may be added.

Solid carrier material may be an attractive bait for the pests in question, and, in particular, may be an organic material such as bran, grain, flour or meal or a mixture of two or more of these, e.g. bran and flour. Alternatively, it may be an inorganic material, for example finely divided silica. The mixture may have other ingredients added to it at appropriate stages, e.g. other attractants, preservatives, colourants or repellants (to induce selectivity and dissuade non-pest species from ingesting the material). The final pesticide may be used in solid form, e.g. made into granules or pellets, applied to the locus of the pests by scattering, or in a sprayable form, i.e. a suspension of carrier particles in a suitable liquid. For slug and snail control, pellets are preferred, preferably applied at a rate sufficient to provide a good chance that a slug will find a pellet, and with each pellet being of a size and having an active ingredient concentration such that on consuming the pellet, or on taking successive feeds from several pellets, the slug receives a lethal dose of metaldehyde.

Metaldehyde is generally manufactured in granule form but at a relatively coarse particle size. For example, technical grade metaldehyde tends to have a particle size range around 500 microns or greater, with relatively little material either coarser or very much finer. We have found that by milling together metaldehyde and surface active agent, it is possible to reduce the particle size of the metaldehyde, e.g. to a particle size within the range of 5 to 30 microns, to provide a stable very finely particulate metaldehyde which may then be mixed with a polymer latex and applied to a carrier such as those noted above.

Care needs to be taken in selection of surface active agent for use when milling the metaldehyde. We have found that good results may be obtained by the use of cationic surface active agents, particularly ethoxylated amine types.

It is often also preferable first to mill the metaldehyde to a desired small particle size in the presence of a cationic surface active agent and a stabilising amount of a further surface active agent of a non-ionic type. Such stabilisation is often particularly necessary if the polymeric dispersion, preferably a styrene acrylic copolymer dispersion or emulsion, is to be used as binder to cohere the individual particles on to the carrier material.

The proportions of the various ingredients which go to make up the final formulated pesticidal composition may be varied widely and need to be chosen with care to promote effectiveness. In particular, the proportion of polymeric latex material needs to be sufficient to enable the dispersed metaldehyde to be combined with the carrier and, in many cases, to provide a suitably protective effect, e.g. against weathering, but which should not be present in so great an amount that it masks the action of the metaldehyde in use.

In particular the amount of polymeric latex should not be so great that, following ingestion, the particles of metaldehyde are over-protected and can pass through the target pest effectively without influencing it, i.e. without the metaldehyde exerting its pesticidal activity.

We have found that satisfactory pesticidal compositions may be obtained by dispersing 0.5 to 10 parts by weight of metaldehyde and 5 to 50 parts by weight of water and 0.5 to 5 parts by weight of a cationic surface active agent, milling the mixture to reduce the particle size of the metaldehyde to 30 microns or below, and mixing the mixture with 1 to 20 parts by weight of polymer latex emulsion to provide a metaldehyde suspension which may be sprayed on to suitable carrier material and dried to form a final pesticide composition. The amount of coated composition relative to the carrier may be 1.5 to 10 percent by weight. The amount of the active ingredient, metaldehyde, in the final composition is preferably 1 to 6 percent by weight.

Using the method of the present invention it is possible to produce molluscicidal compositions, particularly in the form of slug pellets, which are both effective and efficient in use and give enhanced control of slug or snail infestations.

In particular, by using the milling to reduce the particle size of the metaldehyde, and by surrounding it with polymeric latex the palatability of the metaldehyde may be improved. In particular, the finely divided metaldehyde can be ingested easily by a slug and an adequate dose of metaldehyde ingested to ensure that the slug dies. The improvement in availability means that less metaldehyde needs to be used per unit area of ground, however large numbers of slug pellets may be used per unit area of ground, materially improving the chances of a slug finding one of them. Obviously the greater the chance that a slug will find a pellet, the greater the efficacy of the pelleted pesticidal formulation.

It has become clear that by using the formulation techniques according to the present invention, metaldehyde formulations may be produced which are much more satisfactorily targetted to the slug population, and which accordingly leave considerably less residual metaldehyde in the environment, thus reducing environmental stress.

The following Examples will serve to illustrate the invention:

### Example 1

A mixture was made up of:

| | |
|---|---|
| water | 295.8 grams |
| metaldehyde technical | 94.7 grams |
| antifoaming agent (Rhodorsil 426R ex Rhone-Poulenc) | 9.0 grams |
| Cationic ethoxylated amine surface active agent (Catafor 09 ex ABM Chemicals) | 11.3 grams |
| partially hydrolysed polyvinyl acetate (Airvol 203 ex Air Products) | 11.3 grams |
| wetting agent (Hyonic PE90 ex Henkel-Nopco) | 4.5 grams |
| antimicrobial agent (Proxel GXL ex ICI) | 4.5 grams |
| Styrene/acrylic latex, 50% polymer (Vinacryl 18246 ex Vinamul) | 19.0 grams |

All the components were placed in a ball mill and milled for 21 hours at room temperature to give a suspension in which the particle size of all particles was below 30 microns.

Deionised water was then sprayed on to bran, following which 1 part by weight suspension was then sprayed on to 3 parts by weight of dampened bran and the mixture extruded to form pellets.

The pellets were allowed to air dry and were then applied at a rate of 100 pellets per square metre to test areas containing known numbers of slugs. It was found that after 24 hours, 90 percent of the slugs were clearly affected and by 96 hours after application all were dead.

### Example 2

The process was repeated, adding half the milled suspension/latex to bran, to give an active ingredient level of 3%, and tested in the same way as in Example 1. The formulation was still found to be more effective than commercial samples.

### Example 3

The following ingredients were mixed together to form an extendable paste:

| | Parts by weight |
|---|---|
| Aqueous metaldehyde suspension (as in Example 1) | 14.3 |
| wheatmeal | 82.0 |
| chalk | 10.0 |
| benzoic acid | 2.0 |
| calcium stearate | 3.0 |
| blue dye | 0.2 |

This paste was extruded to form pellets approximately 2 mm diameter and an average 4 mm long, and having an average weight in the range of 10-30 mg. These proved highly effective, at an application rate of 10 kg/ha, at controlling grey field slugs.

## Claims

1. A pesticidal composition comprising a mixture of finely-divided particles of solid metaldehyde and a carrier material, the metaldehyde being intimately associated with surface-active agents,
characterised in that:
the size of the metaldehyde particles is substantially within the range of 5 to 30 µm.

2. A pesticidal composition according to Claim 1, characterised in that the finely-divided metaldehyde is bound by an acceptable water-soluble or water-dispersible polymeric material on to the carrier material.

3. A pesticidal composition according to Claim 1 or 2 characterised in that the carrier is bran, flour or a mixture of these.

4. A pesticidal composition according to any one of Claims 1 to 3, in pellet form characterised in that the average pellet weight is in the range of 10-30 milligrams.

5. A pesticidal composition according to any one of Claims 1 to 4, characterised in that the proportion of metaldehyde contained therein is in the range of 1-6 percent by weight.

6. A method of formulating a pesticidal composition based on metaldehyde which comprises milling the metaldehyde in solid form in the presence of a surface-active agent,
characterised by
continuing the milling until a desired particle size or particle size range is reached, and subsequently applying the milled material to a solid carrier material.

7. A method according to Claim 6, characterised in that, prior to or subsequent to milling, a polymeric latex is added.

8. A pesticidal composition made according to the method of Claim 6 or 7.

9. A method of combating pests which comprises applying to the locus of the pests an effective amount of a pesticidal composition according to any one of Claims 1 to 5.

10. A method according to Claim 9 wherein the pests are slugs.

## Patentansprüche

1. Pestizidzusammensetzung umfassend eine Mischung aus feinverteilten Partikeln aus festem Metaldehyd und einem Trägermaterial, wobei der Metaldehyd mit oberflächenaktiven Substanzen innig vereint ist, dadurch gekennzeichnet, daß die Größe der Metaldehydpartikel im wesentlichen im Bereich von 5 bis 30 µm liegt.

2. Pestizidzusammensetzung nach Anspruch 1, dadurch gekennzeichnet, daß der feinverteilte Metaldehyd durch ein akzeptables wasserlösliches oder wasserdispergierbares Polymermaterial auf das Trägermaterial gebunden ist.

3. Pestizidzusammensetzung nach Anspruch 1 oder 2, dadurch gekennzeichnet, daß der Träger Kleie, Mehl oder eine Mischung von beiden ist.

4. Pestizidzusammensetzung nach einem der Ansprüche 1 bis 3 in Pelletform, dadurch gekennzeichnet, daß das mittlere Pelletgewicht im Bereich von 10 bis 30 Milligramm liegt.

5. Pestizidzusammensetzung nach einem der Ansprüche 1 bis 4, dadurch gekennzeichnet, daß der Anteil des darin enthaltenen Metaldehyds im Bereich von 1 bis 6 Gewichtsprozent liegt.

6. Verfahren zur Formulierung einer Pestizidzusammensetzung auf der Basis von Metaldehyd, das Mahlen des Metaldehyds in fester Form in Gegenwart einer oberflächenaktiven Substanz umfaßt, dadurch gekennzeichnet, daß das Mahlen fortgesetzt wird, bis eine gewünschte Partikelgröße oder ein Partikelgrößenbereich erreicht ist und danach Aufbringen des gemahlenen Materials auf ein festes Trägermaterial.

7. Verfahren nach Anspruch 6, dadurch gekennzeichnet, daß vor oder nach dem Mahlen ein Polymerlatex zugesetzt wird.

8. Pestizidzusammensetzung hergestellt nach dem Verfahren gemäß der Ansprüche 6 oder 7.

9. Verfahren zur Bekämpfung von Schädlingen, das Aufbringen einer wirksamen Menge einer Pestizidzusammensetzung nach einem der Ansprüche 1 bis 5 an den Ort der Schädlinge umfaßt.

10. Verfahren nach Anspruch 9, worin die Schädlinge Nacktschnecken sind.

## Revendications

1. Une composition pesticide comprenant un mélange de particules finement divisées de métaldéhyde solide avec une matière de support, le métaldéhyde étant intimement associé à des agents tensio-actifs, caractérisée en ce que : la taille des particules de métaldéhyde s'inscrit sensiblement dans l'intervalle de 5 à 30 µm.

2. Une composition pesticide selon la revendication 1, caractérisée en ce que le métaldéhyde finement divisé est lié à la matière de support par une matière polymère acceptable soluble dans l'eau ou dispersable dans l'eau.

3. Une composition pesticide selon la revendication 1 ou 2, caractérisée en ce que le support est du son, une farine ou un mélange d'entre eux.

4. Une composition pesticide selon l'une quelconque des revendications 1 à 3, sous forme de granulés, caractérisée en ce que le poids moyen des granulés se situe dans l'intervalle de 10 à 30 milligrammes.

5. Une composition pesticide selon l'une quelconque des revendications 1 à 4, caractérisée en ce que la proportion de métaldéhyde qu'elle contient se situe dans l'intervalle de 1 à 6 pour cent en poids.

6. Un procédé de préparation d'une composition pesticide à base de métaldéhyde, qui consiste à broyer le métaldéhyde sous forme solide en présence d'un agent tensio-actif, caractérisé en ce qu'on poursuit le broyage jusqu'à atteindre une taille de particules ou un intervalle de tailles de particules souhaité, et on applique ensuite la matière broyée à une matière de support solide.

7. Un procédé selon la revendication 6, caractérisé en ce qu'on ajoute un latex de polymère avant ou après le broyage.

8. Une composition pesticide préparée selon le procédé de la revendication 6 ou 7.

9. Un procédé pour combattre des nuisibles, qui consiste à appliquer au lieu de séjour des nuisibles une quantité efficace d une composition pesticide selon l'une quelconque des revendications 1 à 5.

10. Un procédé selon la revendication 9, dans lequel les nuisibles sont des limaces.
